(19)

Europäisches
Patentamt
European
Patent Office
Office européen
des brevets

(11)  **EP 4 749 992 A1**

(12)  **EUROPEAN PATENT APPLICATION**

(43) Date of publication:
**27.05.2026  Bulletin 2026/22**

(21) Application number: **25218617.6**

(22) Date of filing: **26.11.2025**

(51) International Patent Classification (IPC):
***H04L 9/08*** *(2006.01)*

(52) Cooperative Patent Classification (CPC):
**H04L 9/085;** H04L 2209/46

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.11.2024  US 202418961170**

(71) Applicants:
• **Beijing Zitiao Network Technology Co., Ltd.
Beijing 100190 (CN)**
• **Lemon Inc.
Grand Cayman, KY1-1205 (KY)**

(72) Inventors:
• **NIU, Yongchuan
Beijing, 100028 (CN)**
• **LU, Donghang
Culver City, 90230 (US)**
• **DAI, Wei
Culver City, 90230 (US)**
• **WANG, Li
Beijing, 100028 (CN)**
• **YAN, Qiang
Beijing, 100028 (CN)**

(74) Representative: **Isarpatent
Patent- und Rechtsanwälte PartG mbB
Friedrichstraße 31
80801 München (DE)**

(54)  **SECURE MULTI-PARTY COMPARISON**

(57)    The present disclosure involves methods, apparatus, and systems for processing comparison in secure multiparty computation. One example method includes, partitioning a first difference ($x$) between a first share of value $a$ and a first share of value $b$ into N sections, and determining whether a<b based on first indicators and second indicators corresponding to the N sections. The first indicators include a first indicator indicating a comparison result between $x_j$ and $y_j$ computed based on a Vector Oblivious Shift Evaluation (VOSE) protocol, where $x_j$ is a j$^{th}$ section of x, and $y_j$ is a j$^{th}$ section of N sections of a second difference ($y$) between a second secret share of $b$ and a second secret share of $a$. The second indicators include a second indicator indicating whether $x_j$ is a most significant section among sections of the first difference where $x_j \neq y_j$.

FIG. 4

EP 4 749 992 A1

**Description**

**TECHNICAL FIELD**

The present disclosure generally relates to data processing, and in particular, processing equality testing in secure multi-party computation.

**BACKGROUND**

Data plays an increasingly important role in modern society, driving advancements across various sectors. Effective collaboration among data custodians can be beneficial to the value of data. On the other hand, data collaboration may be compromised by isolated data silos due to the control of data by different entities, regulatory compliance on data privacy across countries, and frequent privacy breaches, etc.

Secure multi-party computation (MPC) is a technique developed to address some of the issues in data collaborations. MPC allows parties to jointly evaluate or analyze their respective private data without sharing the private data with others. Thus, data privacy of each party is protected. As data volumes increase, the computational and communication complexities of MPC also escalate significantly. Therefore, MPC protocols are also developed for specific use scenarios to meet practical data security and computational needs.

**SUMMARY**

The present disclosure relates to data processing, and in particular, processing comparison in secure multi-party computation (MPC). According to a first aspect, a computer-implemented method is provided. The computer-implemented method includes generating, by a first party of a secure multi-party computation (MPC), a first difference between a first secret share of a first value and a first secret share of a second value; partitioning the first difference in binary form into N sections, where N is a positive integer; and determining whether the first value is smaller than the second value based on first indicators and second indicators corresponding to the N sections. The first indicators include a first indicator that indicates a comparison result between $x_j$ and $y_j$ computed based on a Vector Oblivious Shift Evaluation (VOSE) protocol, where $x_j$ is a $j^{th}$ section of the first difference, $y_j$ is a $j^{th}$ section of N sections of a second difference between a second secret share of the second value and a second secret share of the first value, and $j = 0, 1, ..., N - 1$. The second indicators include a second indicator that indicates whether $x_j$ is a most significant section among sections of the first difference where $x_j \neq y_j$.

With reference to the first aspect, in some implementations, the method further includes for the $j^{th}$ section $(x_j)$ of the first difference: receiving a first secret share of the first indicator, and receiving a second secret share of the second indicator.

With reference to the first aspect, in some implementations, the second difference is generated by a second party of the secure MPC. The method further includes, for the $j^{th}$ section $(x_j)$ of the first difference: sending, to the second party, a second secret share of the first indicator; and sending, to the second party, a second secret share of the second indicator.

With reference to the first aspect, in some implementations, each section of the N sections including M bit, where M is a positive integer. The first indicator is computed by generating, by the first party, a first vector including $2^{M+1}$ bits, where $2^M$ bits before a $\varepsilon_0{}^{th}$ positions in the first vector are set as 1, and $2^M$ bits at and after the $\varepsilon_0{}^{th}$ position in the first vector are set as 0; receiving, by the first party, a first share vector of a second vector including $2^{M+1}$ bits, where each bit in the second vector is offset by $\varepsilon_1$ positions from a corresponding bit in the first vector; and sending, to a second party of the secure MPC, a second share vector of the second vector and an offset $\varepsilon_1$.

With reference to the first aspect, in some implementations, the first secret share of the first indicator is a bit at a $(\varepsilon_0 + x_j + \varepsilon_1 - y_j)^{th}$ position of the first share vector of the second vector. The second secret share of the first indicator is a bit at the $(\varepsilon_0 + x_j + \varepsilon_1 - y_j)^{th}$ position of the second share vector of the second vector.

With reference to the first aspect, in some implementations, the method further includes receiving a first secret share of a third indicator that indicates whether $x_j = y_j$. The first secret share of the second indicator is computed based on the first secret share of the third indicator.

With reference to the first aspect, in some implementations, each section of the N sections includes M bit, where M is a positive integer. The third indicator is computed by generating, by the first party, a third vector including $2^M$ bits, where a bit at a $\varepsilon_2{}^{th}$ position in the third vector is set as 1 and other bits are set as 0; receiving, by the first party, a first share vector of a fourth vector including $2^M$ bits, where each bit in the fourth vector is offset by $\varepsilon_3$ positions from a corresponding bit in the third vector; and sending, to a second party of the secure MPC, a second share vector of the fourth vector and an offset $\varepsilon_3$.

With reference to the first aspect, in some implementations, the first secret share of the third indicator is a bit at a $(\varepsilon_2 + x_j + \varepsilon_3 - y_j)^{th}$ position of the first share vector of the fourth vector. The second secret share of the third indicator is a bit at the $(\varepsilon_2 + x_j + \varepsilon_3 - y_j)^{th}$ position of the second share vector of the fourth vector.

With reference to the first aspect, in some implementations, determining whether the first value is smaller than the second value based on the first indicators and the second indicators corresponding to the N sections includes: for the $j^{th}$ section ($x_j$) of the first difference: generating $t_j$ by concatenating $\langle lt_j \rangle_0^B$ and $\langle s_j \rangle_0^A$, where $\langle lt_j \rangle_0^B$ is the first secret share of the first indicator and $\langle s_j \rangle_0^A$ is the first secret share of the second indicator; and receiving a first secret share of a fourth indicator that indicates whether $t_j = k_j$, where $k_j$ is generated by concatenating ( $\langle lt_j \rangle_1^B \oplus 1$ ) and $\left( -\langle s_j \rangle_1^A \right) mod\ (N+1)$, where $\langle lt_j \rangle_1^B$ is a second secret share of the first indicator and $\langle s_j \rangle_1^A$ is a second secret share of the second indicator.

With reference to the first aspect, in some implementations, the secure MPC is a secure two-party computation.

According to a second aspect, one or more computer-readable storage media is provided. The one or more computer-readable storage media stores one or more instructions that, when executable by one or more computers, cause the one or more computers to perform the method according to the first aspect or one or more implementations of the first aspect.

According to a third aspect, a computer-implemented system is provided. The computer-implemented system includes one or more computers and one or more computer memory devices interoperably coupled with the one or more computers. The one or more computer memory devices have computer-readable storage media storing one or more instructions that, when executed by the one or more computers, perform the method according to the first aspect or one or more implementations of the first aspect.

While generally described as computer-implemented software embodied on tangible media that processes and transforms the respective data, some or all of the aspects can be computer-implemented methods or further included in respective systems or other devices for performing this described functionality. The details of these and other aspects and implementations of the present disclosure are set forth in the accompanying drawings and the description below. Other features, objects, and advantages of the disclosure will be apparent from the description and drawings, and from the claims.

**BRIEF DESCRIPTION OF DRAWINGS**

FIG. 1 illustrates an example of a Vector Oblivious Shift Evaluation (VOSE) protocol using Boolean operation.
FIG. 2 illustrates an example of a VOSE protocol using arithmetic operation.
FIG. 3 illustrates an example process of performing comparison in a secure multi-party computation (MPC) system.
FIG. 4 illustrates a flow chart of an example method of performing equality testing in the secure MPC system.
FIG. 5 illustrates a schematic diagram of an example computing system.

Like reference numbers and designations in the various drawings indicate like elements.

**DETAILED DESCRIPTION**

This specification relates to methods, apparatuses, and systems for performing comparison in secure multi-party computation (MPC). Secure comparison is widely used in many secure computation scenarios, such as privacy-preserving machine learning, private set intersection, secure data mining, etc. Secure comparison can calculate whether a first private input is smaller than a second private input, without disclosing the private inputs to any party. In secure MPC, especially in secure two-party computation (2PC), secure comparison remains the bottleneck that affects the performance of the secure MPC.

The present disclosure provides techniques to improve the speed and efficiency of secure comparison in secure MPC. In some implementations, the secure MPC can invoke a comparison protocol that includes local computation based on Vector Oblivious Shift Evaluation (VOSE) protocol. For example, a first party of the secure MPC can generate a first difference ($x$) between a first share of a first value $a$ and a first share of a second value $b$, and partition the first difference (e.g., in binary form) into N sections, where N is a positive integer. For each section, the first party receives a first share of a first indicator and a first share of a second indicator. The first indicator indicates whether the section is smaller than a corresponding section of a second difference ($y$) between a second share of the second value $b$ and a second share of $a$. The second indicator indicates whether the section is a most significant section unequal to the corresponding section of $y$. In some implementations, secret shares of the first indicator can be generated based on Vector Oblivious Shift Evaluation (VOSE) protocol.

For example, for a j$^{th}$ section ($x_j$) of the first difference ($x$), where $j$ = 0, 1, ... , $N$ - 1: the first party receives, a first secret share of a first indicator that indicates whether $x_j < y_j$, where $y_j$ is a j$^{th}$ section of N sections of a second difference between a second secret share of the second value and a second secret share of the first value.

The first party also receives a first secret share of a second indicator that indicates whether $x_j$ is a most significant section in the N sections where $x_j \neq y_j$. Based on first indicators and second indicators corresponding to the N sections, the secure MPC can determine whether the first value is smaller than the second value.

The described techniques can achieve one or more technical effects. For example, by including local computation based on the VOSE protocol, online communication between the first party and the second party can be reduced, which can increase the speed and efficiency of the secure MPC. For another example, the described techniques can protect data privacy and enhance data security against two semi-honest parties. In some implementations, additional or different technical effects can be achieved.

Techniques of the present disclosure can be applied in a variety of practical scenarios. For example, in cryptographic key management, secure MPC can help build an environment for generating, storing, and managing cryptographic keys without the need for a hardware security appliance. For another example, in the healthcare domain, secure MPC can provide a safe solution for encrypting, storing, and transmitting sensitive medical data. For yet another example, in the financial sector, secure MPC can help financial organizations to jointly analyze financial trends without exposing individual customer data.

The above aspects and some other aspects of the present disclosure are discussed in greater detail below.

The table below shows some example notations and their corresponding meaning.

| Example Notations | |
|---|---|
| Notation | Meaning |
| $Z_p$ | For arithmetic sharing, a value x having *l* bits in length is shared additively over the ring $Z_p$ |
| $Z_2$ | For Boolean sharing, each bit of a value x having *l* bits in length is shared independently over the ring $Z_2$ |
| $\langle x \rangle^A$ | arithmetic share of x |
| $\langle x \rangle^B$ | Boolean share of x |
| $\langle x \rangle_i$ | Secret share of x that belongs to party i. |
| $\mathbf{1}\{b\}$ | Indicator function, which equals to 1 when b is true and equals to 0 when b is false. |
| $s \leftarrow S$ | Sampling an element s, uniformly at random from S. |
| $\parallel$ | concatenation operation |
| $\lceil x \rceil$ | The smallest integer greater than or equal to x: $\lceil x \rceil = min\{n \in Z \mid n \geq x\}$ |

In some implementations of the disclosed techniques, in secure MPC, two or more parties can perform equality testing (e.g., determining whether a private input from a first party is equal to a private input from a second party) and comparison (e.g., determining whether a private input from a first party is smaller than a private input from a second party) on private inputs owned by different parties, without disclosing the private inputs to other parties.

In some implementations, the MPC can perform equality testing by invoking equality testing protocols (e.g.,

$\prod_{eq}^{N,B}(a,b)$ and $\prod_{eq}^{N,A}(a,b)$. The equality testing protocols can include offline computation (also referred to as local computation) by the parties, so that the number of communication rounds between the parties and the overall computational complexity can be further reduced.

The algorithm below provides an example Vector Oblivious Shift Evaluation (VOSE) protocol $\prod_{vose}^{N,B}(\vec{T'})$ using Boolean operation.

**Input:** $P_0$ inputs a vector $\vec{T'} \in \mathbb{Z}_2^\mathbb{N}$.

**Output:** $P_0$ receives a share vector $\vec{T_0}$; $P_1$ receives an offset $\epsilon_1 \in [N]$ and a share vector $\vec{T_1}$,

where $\vec{T_0} \oplus \vec{T_1} = shift(\vec{T'}, \epsilon_1)$

1.      $P_0$ and $P_1$ invoke $N-1$ out of $N$ random oblivious transfer.

     a.   $P_0$ receives $\{m_i | i \in [N], m_i \in \mathbb{Z}_2^\mathbb{N}\}$

     b.   $P_1$ receives $\epsilon_1 \in [N]$ and $\{m_i | i \in [N] \text{ except } \epsilon_1, m_i \in \mathbb{Z}_2^\mathbb{N}\}$

2.      $P_0$ and $P_1$ generate the matrix $M \in \{0, 1\}^{N \times N}$ by using $m_i$ as the column vectors for $i \in [N]$.

3.      $P_0$ and $P_1$ right cycle shift the $i^{th}$ row of $M$ by $i$ positions locally for $i \in [N]$.

4.      $P_0$ computes $v_i = \oplus_{j=0}^{N-1} m_{i,j}$ and $u_i = \oplus_{j=0}^{N-1} m_{j,i}$, for $i \in [N]$, and denotes $\vec{V} = \{v_0, \dots, v_{N-1}\}$ and $\vec{U} = \{u_0, \dots, u_{N-1}\}$.

---

5.      $P_1$ computes $w_i = v_i \oplus u_{\epsilon_1 + i}$, and denotes $\vec{W} = \{w_0, \dots, w_{N-1}\}$.

6.      $P_0$ sends $\vec{S'} = \vec{T'} \oplus \vec{U}$ to $P_1$ and sets $\vec{T_0} = \vec{V}$.

7.      $P_1$ computes $\vec{T_1} = shift(\vec{S'}, \epsilon_1) \oplus \vec{W}$.

---

$\rightarrow$

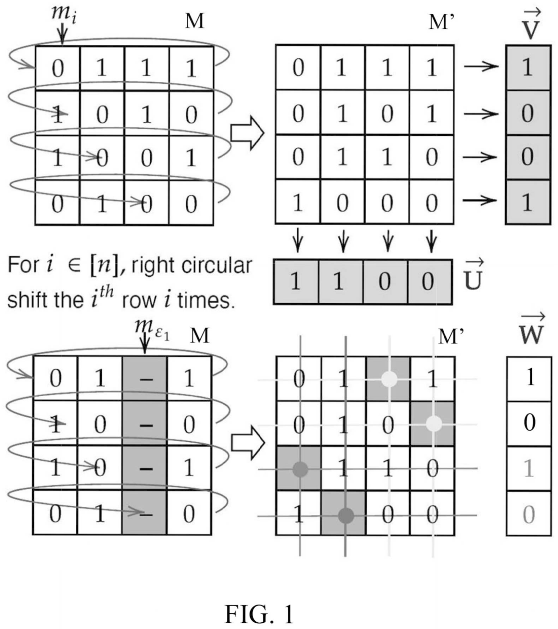

With reference to FIG. 1. by invoking the VOSE protocol ( $\prod_{vose}^{N,B}(\vec{T'})$ ) using Boolean operation, at step 1-2 of the algorithm, the first party (P0) can generate a matrix $M = \{m_i | i \in |N|, m_i \in \mathbb{Z}_2^\mathbb{N}\}$, which has N vectors ($m_i$), each vector has N elements, and each element is a bit (either o or 1). A second party (P1) can generate an integer $\varepsilon_1 \in [N]$ as an offset. Based on a N-1 out of N oblivious transfer, P1 can receive N-1 vectors of the N vectors, except the vector $m_{\varepsilon_1}$. Therefore, P0 obtains the complete matrix M, while P1 can obtain the matrix M except for the vector $m_{\varepsilon_1}$. As shown in FIG. 1, P0 generates a matrix M with 4 rows and 4 columns. P1 obtains the matrix M, except for the third column.

At step 3 of the algorithm, P0 and P1 right circular shift the i$^{th}$ row of matrix M by i positions for $i \in [N]$, and denote the new matrix as M'. As shown in FIG. 1, P0 and P1 each right shift row 0 by 0 position, right shift row 1 by 1 positions, right shift row 2 by 2 positions, and right shift row 3 by 3 positions.

At step 4 of the algorithm, $P_0$ computes $v_i = \oplus_{j=0}^{N-1} mod\ 2$ and $u_i = \oplus_{j=0}^{N-1} mod\ 2$ for $i \in [N]$, and generates the vector $\vec{V} = \{v_0, \dots, v_{N-1}\}$ and the vector $\vec{U} = \{u_0, \dots, u_{N-1}\}$. As shown in FIG. 1, the i$^{th}$ element in vector $\vec{V}$ is the XOR value of the N bits in the i$^{th}$ row of the matrix M, and the i$^{th}$ element in vector $\vec{U}$ is the XOR value of the N bits in the i$^{th}$ column of the matrix M.

At step 5 of the algorithm, $P_1$ computes $w_i = v_i \oplus u_{\varepsilon_1 + i}$, to generate the vector $\vec{W} = \{w_0, \dots, w_{N-1}\}$. As shown in FIG. 1, $w_0 = v_0 \oplus u_2$, $w_1 = v_1 \oplus u_3$, $w_2 = v_2 \oplus u_0$, and $w_3 = v_3 \oplus u_1$.

As such, P1 obtains the vector $\vec{W} = \{w_0, \dots, w_{N-1}\}$, while P0 obtains the vector $\vec{V} = \{v_0, \dots, v_{N-1}\}$ and the vector $\vec{U} = \{u_0, \dots, u_{N-1}\}$. The vectors $\vec{W}$, $\vec{V}$ and $\vec{U}$ satisfy the relation of $\vec{W} = shift(\vec{U}, \varepsilon_1) \oplus \vec{V}$.

At step 6 of the algorithm, $P_0$ sends $\vec{S'} = \vec{T'} \oplus \vec{U}$ to $P_1$ and sets $\vec{T_0} = \vec{V}$.

At step 7 of the algorithm, $P_1$ computes $\vec{T_1} = shift(\vec{S'}, \varepsilon_1) \oplus \vec{W}$.

As a result, $\vec{T_0} \oplus \vec{T_1} = shift(\vec{T'}, \varepsilon_1)$. In other words, by invoking the VOSE protocol based on Boolean operation, based on a vector $\vec{T'} \in \mathbb{Z}_2^\mathbb{N}$ from P0, P0 can receive a share vector $\vec{T_0}$, $P_1$ can receive an offset $\varepsilon_1 \in [N]$ and a share vector $\vec{T_1}$, where $\vec{T_0} \oplus \vec{T_1} = shift(\vec{T'}, \varepsilon_1)$.

An equality testing protocol $\prod_{eq}^{N,B}(a, b)$ can be built based on the VOSE protocol based on Boolean operation. The first party can input a first value (a) having n bits in length, and the second party can input a second value (b) having n bits in length. By invoking the equality testing protocol $\prod_{eq}^{N,B}(a, b)$, the first party can receive a Boolean share of an indication bit ( $\langle \mathbf{1}\{a = b\}\rangle_0^B$ ) indicating whether $a = b$, and the second party can receive a Boolean share of the indication

bit ( $\langle \mathbf{1}\{a = b\}\rangle_1^B$ ). $\langle \mathbf{1}\{a = b\}\rangle_0^B \oplus \langle \mathbf{1}\{a = b\}\rangle_1^B = 1$ indicates that *a = b*, and $\langle \mathbf{1}\{a = b\}\rangle_0^B \oplus \langle \mathbf{1}\{a = b\}\rangle_1^B = 0$ indicates that *a ≠ b*.

The algorithm below provides an example of the equality testing protocol $\prod_{eq}^{N,B}(a, b)$, which invokes the VOSE protocol $\prod_{vose}^{N,B}(\overrightarrow{T'})$ using Boolean operation.

---

The parameter $N$ is defined as $N = 2^n$

**Input:** $P_0$ inputs $a \in \{0, 1\}^n$ and $P_1$ inputs $b \in \{0, 1\}^n$

**Output:** $P_0$, $P_1$ learn $\langle \mathbf{1}\{a = b\}\rangle_0^B$ and $\langle \mathbf{1}\{a = b\}\rangle_1^B$, respectively.

<u>Offline</u>

1.      $P_0$ picks $\epsilon_0 \leftarrow [N]$.

2.      $P_0$ generates a vector $\overrightarrow{T'} = \{t'_i \mid i \in [N], t'_i \in \{0,1\}\}$, where $t'_{\epsilon_0} = 1$ and $t'_i = 0$ for $i \in [N]$ except when $i = \epsilon_0$

3.      $P_0$ and $P_1$ invoke $\{\overrightarrow{T_0}, \overrightarrow{T_1}, \epsilon_1\} = \prod_{vose}^{N,B}(\overrightarrow{T'})$

<u>Online</u>

1.      $P_0$ computes $w_0 = (a + \epsilon_0) \bmod N$ and send it to $P_1$, while $P_1$ computes $w_1 = (\epsilon_1 - b) \bmod N$ and send it to $P_0$

2.      $P_0$ and $P_1$ compute $w = w_0 + w_1 = (a - b + \epsilon_0 + \epsilon_1) \bmod N$, locally.

3.      $P_0$ sets $\langle \mathbf{1}\{a = b\}\rangle_0^B = \langle t_w\rangle_0^B$ and $P_1$ sets $\langle \mathbf{1}\{a = b\}\rangle_1^B = \langle t_w\rangle_1^B$ .

---

The equality testing protocol $\prod_{eq}^{N,B}(a, b)$ includes offline computation and online computation. At step 1 of the offline computation, P0 generates a random number $\varepsilon_0$ from 0 to N as an offset, where $N = 2^n$.

At step 2 of the offline computation, P0 generates a vector $\overrightarrow{T'}$ having N bits. Only the $\varepsilon_0^{th}$ bits of the N bits is 1, while all other bits are 0. For example, if n=2 and $\varepsilon_0$=2, then P0 generates $\overrightarrow{T'} = [0,0,1,0]$.

At step 3 of the offline computation, P0 and P1 invoke the VOSE protocol $\prod_{vose}^{N,B}(\overrightarrow{T'})$. P0 inputs the vector $\overrightarrow{T'}$. As a result, P0 receives a share vector $\overrightarrow{T_0}$, $P_1$ can receive a share vector $\overrightarrow{T_1}$ and an offset $\varepsilon_1$, where $\overrightarrow{T_0} \oplus \overrightarrow{T_1} = shift(\overrightarrow{T'}, \varepsilon_1)$. $\overrightarrow{T_1} = shift(\overrightarrow{T'}, \varepsilon_1)$. For example, if n=2, $\varepsilon_0$=2, and P0 generates $\overrightarrow{T'} = [0,0,1,0]$, by invoking the VOSE $\prod_{vose}^{N,B}(\overrightarrow{T'})$, P0 can receive $\overrightarrow{T_0} = [1,1,0,1]$; P1 can receive $\overrightarrow{T_1} = [1,1,0,0]$ and $\varepsilon_1$=1, so that $\overrightarrow{T_0} \oplus \overrightarrow{T_1} = shift(\overrightarrow{T'}, \varepsilon_1) = [0,0,0,1]$.

At step 1 of the online computation, $P_0$ computes $w_0 = (a + \varepsilon_0) \bmod N$ and sends it to $P_1$. $P_1$ computes $w_1 = (\varepsilon_1 - b) \bmod N$ and sends it to $P_0$.

At step 2 of the online computation, $P_0$ and $P_1$ compute $w = w_0 + w_1 = (a - b + \varepsilon_0 + \varepsilon_1) \bmod N$ locally.

At step 3 of the online computation, $P_0$ sets $\langle \mathbf{1}\{a = b\}\rangle_0^B = \langle t_w\rangle_0^B$, which is the w$^{th}$ bit in the share vector $\overrightarrow{T_0}$. $P_1$ sets $\langle \mathbf{1}\{a = b\}\rangle_1^B = \langle t_w\rangle_1^B$, which is the w$^{th}$ bit in the share vector $\overrightarrow{T_1}$.

As such, by invoking the equality testing protocol $\prod_{eq}^{N,B}(a, b)$, P0 receives a Boolean share of the indication bit ( $\langle \mathbf{1}\{a = b\}\rangle_0^B$ ), and P1 receives a Boolean share of the indication bit ( $\langle \mathbf{1}\{a = b\}\rangle_1^B$ ).

A comparison protocol $\prod_{lt}^{N,B}(a, b)$ can be built based on the VOSE protocol based on Boolean operation. The first party can input a first value (a) having n bits in length, and the second party can input a second value (b) having n bits in length. By invoking the comparison protocol $\prod_{lt}^{N,B}(a, b)$, the first party can receive a Boolean share of an indication bit ( $\langle \mathbf{1}\{a < b\}\rangle_0^B$ ) indicating whether *a* < b, and the second party can receive a Boolean share of the indication bit ( $\langle \mathbf{1}\{a < b\}\rangle_1^B$ ). $\langle \mathbf{1}\{a < b\}\rangle_0^B \oplus \langle \mathbf{1}\{a < b\}\rangle_1^B = 1$ indicates that *a < b*, and $\langle \mathbf{1}\{a < b\}\rangle_0^B \oplus \langle \mathbf{1}\{a < b\}\rangle_1^B = 0$

indicates that $a \geq b$.

The algorithm below provides an example of the comparison protocol $\prod_{lt}^{N,B}(a,b)$, which invokes the VOSE protocol $\prod_{vose}^{2N,B}(\vec{T'})$ using Boolean operation.

---

The parameter $N$ is defined as $N = 2^n$

**Input:** $P_0$ inputs $a \in \{0,1\}^n$ and $P_1$ inputs $b \in \{0,1\}^n$

**Output:** $P_0, P_1$ learn $\langle \mathbf{1}\{a < b\}\rangle_0^B$ and $\langle \mathbf{1}\{a < b\}\rangle_1^B$, respectively.

<u>Offline</u>

1.      $P_0$ picks $\epsilon_0 \leftarrow [2N]$

2.      $P_0$ generates a vector $\vec{T'} = \{t'_i | i \in [2N], t'_i \in \{0,1\}\}$, where:

$$t'_i = 1 \text{ for } i \in [(\epsilon_0 - 1) \bmod 2N, \ldots, (\epsilon_0 - N) \bmod 2N]$$
$$t'_i = 0 \text{ for } i \in [\epsilon_0 \bmod 2N, (\epsilon_0 + 1) \bmod 2N \ldots, (\epsilon_0 + N - 1) \bmod 2N]$$

3.      $P_0$ and $P_1$ invoke $\{\vec{T_0}, \vec{T_1}, \epsilon_1\} = \prod_{vose}^{2N,B}(\vec{T'})$

<u>Online</u>

1.      $P_0$ computes $w_0 = (a + \epsilon_0) \bmod 2N$ and send it to $P_1$, while $P_1$ computes $w_1 = (\epsilon_1 - b) \bmod 2N$ and send it to $P_0$

2.      $P_0$ and $P_1$ compute $w = w_0 + w_1 = (a - b + \epsilon_0 + \epsilon_1) \bmod 2N$, locally.

3.      $P_0$ sets $\langle \mathbf{1}\{a < b\}\rangle_0^B = \langle t_w \rangle_0^B$ and $P_1$ sets $\langle \mathbf{1}\{a < b\}\rangle_1^B = \langle t_w \rangle_1^B$ .

---

The comparison protocol $\prod_{lt}^{N,B}(a,b)$ includes offline computation and online computation. At step 1 of the offline computation, P0 generates a random number $\varepsilon_0$ from 0 to N as an offset, where $N = 2^n$.

At step 2 of the offline computation, P0 generates a vector $\vec{T}$ having 2N bits. The N bits preceding the $\varepsilon_0^{th}$ position are set as 1, while the N bits including and after the $\varepsilon_0^{th}$ position are set as 0. For example, if n=2 and $\varepsilon_0$=3, then P0 generates $\vec{T}$ = [1,1,1,0,0,0,0,1].

At step 3 of the offline computation, P0 and P1 invoke the VOSE protocol $\prod_{vose}^{2N,B}(\vec{T'})$. P0 inputs the vector $\vec{T}$. As a result, P0 receives a share vector $\vec{T_0}$, $P_1$ can receive a share vector $\vec{T_1}$ and an offset $\varepsilon_1$, where $\vec{T_0} \oplus \vec{T_1} = shift(\vec{T}, \varepsilon_1)$.

For example, if n=4, $\varepsilon_0$=2, and P0 generates $\vec{T}$ = [1,1,1,0,0,0,0,1], by invoking the VOSE $\prod_{vose}^{2N,B}(\vec{T'})$, P0 can receive $\vec{T_0}$ = [1,1,0,0,1,1,0,0]; P1 can receive $\vec{T_1}$ = [0,0,1,1,1,1,0,0] and $\varepsilon_1$ =1, so that $\vec{T_0} \oplus \vec{T_1} = shift(\vec{T}, \varepsilon_1)$ = [1,1,1,1,0,0,0,0].

At step 1 of the online computation, $P_0$ computes $w_0 = (a + \varepsilon_0) \bmod 2N$ and sends it to $P_1$. $P_1$ computes $w_1 = (\varepsilon_1 - b) \bmod 2N$ and sends it to $P_0$.

At step 2 of the online computation, $P_0$ and $P_1$ compute $w = w_0 + w_1 = (a - b + \varepsilon_0 + \varepsilon_1) \bmod 2N$ locally.

At step 3 of the online computation, $P_0$ sets $\langle \mathbf{1}\{a < b\}\rangle_0^B = \langle t_w \rangle_0^B$, which is the $w^{th}$ bit in the share vector $\vec{T_0}$. $P_1$ sets $\langle \mathbf{1}\{a < b\}\rangle_1^B = \langle t_w \rangle_1^B$, which is the $w^{th}$ bit in the share vector $\vec{T_1}$.

As such, by invoking the comparison protocol $\prod_{lt}^{N,B}(a,b)$, P0 receives a Boolean share of the indication bit ( $\langle \mathbf{1}\{a < b\}\rangle_0^B$ ), and P1 receives a Boolean share of the indication bit ( $\langle \mathbf{1}\{a < b\}\rangle_1^B$ ).

The algorithm below provides an example of a VOSE protocol $\prod_{vose}^{N,A}(\vec{T'})$ using arithmetic operation.

---

**Input:** $P_0$ inputs a vector $\vec{T'} \in \mathbb{Z}_p^{\mathbb{N}}$.

**Output:** $P_0$ receives a share vector $\vec{T_0}$; $P_1$ receives an offset $\epsilon_1 \in [N]$ and $\vec{T_1}$, where $\vec{T_0} + \vec{T_1} = shift(\vec{T'}, \epsilon_1)$

1.      $P_0$ and $P_1$ invoke $N-1$ out of $N$ random oblivious transfer.

     a. $P_0$ receives $\{m_i | i \in [N], m_i \in \mathbb{Z}_p^{\mathbb{N}}\}$

     b. $P_1$ receives $\epsilon_1 \in [N]$ and $\{m_i | i \in [N] \; except \; \epsilon_1, m_i \in \mathbb{Z}_p^{\mathbb{N}}\}$

2.      $P_0$ and $P_1$ generate the matrix $M \in \{\mathbb{Z}_p\}^{N \times N}$ by using $m_i$ as the column vectors for $i \in [N]$.

3.      $P_0$ and $P_1$ right cycle shift the $i^{th}$ row of $M$ by $i$ positions locally for $i \in [N]$.

4.      $P_0$ computes $v_i = \sum_{j=0}^{N-1} m_{(i,j)} \bmod p$ and $u_i = \sum_{j=0}^{N-1} m_{(j,i)} \bmod p$ for $i \in [N]$, and denotes $\vec{V} = \{v_0, \ldots, v_{N-1}\}$ and $\vec{U} = \{u_0, \ldots, u_{N-1}\}$.

5.      $P_1$ computes $w_i = v_i - u_{\epsilon_1 + i} \bmod p$, and denotes $\vec{W} = \{w_0, \ldots, w_{N-1}\}$.

6.      $P_0$ sends $\vec{S'} = \vec{T'} + \vec{U}$ to $P_1$ and sets $\vec{T_0} = -\vec{V}$.

7.      $P_1$ computes $\vec{T_1} = shift(\vec{S'}, \epsilon_1) + \vec{W}$.

---

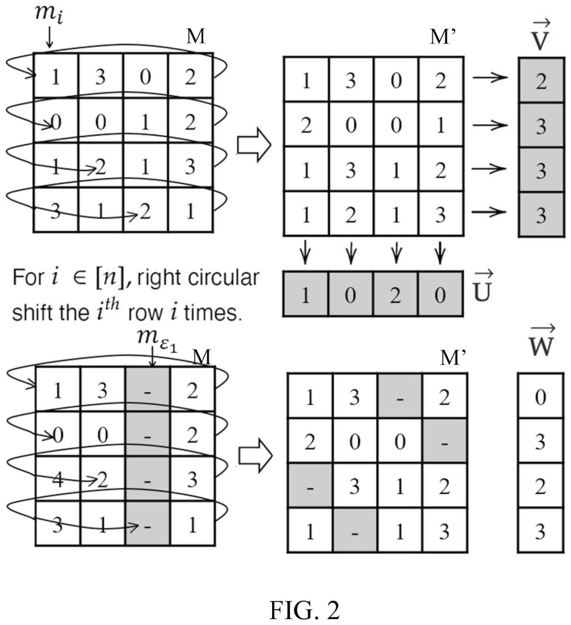

With reference to FIG. 2. by invoking the VOSE protocol ( $\prod_{vose}^{N,A}(\vec{T'})$ using arithmetic operation, at step 1-2 of the algorithm, the first party (P0) can generate a matrix $M = \{m_i | i \in [N], m_i \in \mathbb{Z}_p^{\mathbb{N}}\}$, which has N vectors ($m_i$), each vector has N elements, and each element is an integer between 0 and N. In other words, the calculations are performed on a ring of $\mathbb{Z}_p^{\mathbb{N}}$, where calculation results are mod by p (e.g., p=N) to be converted to an integer between 0 and N.

A second party (P1) can generate an integer $\varepsilon_1 \in [N]$ as an offset. Based on a N-1 out of N oblivious transfer, P1 can receive N-1 vectors of the N vectors, except the vector $m_{\varepsilon_1}$. Therefore, P0 obtains the complete matrix M, while P1 can obtain the matrix M except for the vector $m_{\varepsilon_1}$.

At step 3 of the algorithm, P0 and P1 right circular shift the $i^{th}$ row of matrix M by i positions for $i \in [N]$, and denote the new matrix as M'. As shown in FIG. 2, P0 and P1 each right shift row 0 by 0 position, right shift row 1 by 1 position, right shift row 2 by 2 positions, and right shift row 3 by 3 positions.

At step 4 of the algorithm, $P_0$ computes $v_i = \sum_{j=0}^{N-1} m_{(i,j)} \bmod p$ and $u_i = \sum_{j=0}^{N-1} m_{(j,i)} \bmod p$ for $i \in [N]$, and generates the vector $\vec{V} = \{v_0, \ldots, v_{N-1}\}$ and the vector $\vec{U} = \{u_0, \ldots, u_{N-1}\}$. As shown in FIG. 2, the $i^{th}$ element in vector $\vec{V}$ is the sum of the N integers in the $i^{th}$ row of the matrix M then mod by p, and the $i^{th}$ element in vector $\vec{U}$ is the sum of the N integers in the $i^{th}$ column of the matrix M then mod by p.

At step 5 of the algorithm, $P_1$ computes $w_i = (v_i - u_{\varepsilon_1 + i}) \bmod p$, to generate the vector $\vec{W} = \{w_0, \ldots, w_{N-1}\}$. As shown in FIG. 2, $w_0 = (v_0 - u_2) \bmod 4$, $w_1 = (v_1 - u_3) \bmod 4$, $w_2 = (v_2 - u_0) \bmod 4$, and $w_3 = (v_3 - u_1) \bmod 4$.

As such, P1 obtains the vector $\vec{W} = \{w_0, \ldots, w_{N-1}\}$. while P0 obtains the vector $\vec{V} = \{v_0, \ldots, v_{N-1}\}$ and the vector $\vec{U} = \{u_0, \ldots, u_{N-1}\}$. The vectors $\vec{W}$, $\vec{V}$ and $\vec{U}$ satisfy $\vec{W} = shift(\vec{U}, \varepsilon_1) - \vec{V}$.

At step 6 of the algorithm, $P_0$ sends $\vec{S'} = \vec{T'} + \vec{U}$ to $P_1$ and sets $\vec{T_0} = -\vec{V}$.

At step 7 of the algorithm, $P_1$ computes $\vec{T_1} = shift(\vec{S'}, \varepsilon_1) + \vec{W}$.

As a result, $\vec{T_0} \oplus \vec{T_1} = shift(\vec{T'}, \varepsilon_1)$. In other words, by invoking the VOSE protocol based on arithmetic operation, based on a vector $\vec{T'} \in \mathbb{Z}_P^{\mathbb{N}}$ from P0, P0 can receive a share vector $\vec{T_0}$, $P_1$ can receive an offset $\varepsilon_1 \in [N]$ and a share vector $\vec{T_1}$, where $\vec{T_0} \oplus \vec{T_1} = shift(\vec{T'}, \varepsilon_1)$.

An equality testing protocol $\prod_{eq}^{N,A}(a, b)$ can be built based on the VOSE protocol based on arithmetic operations. The first party can input a first value (a) having n bits in length, and the second party can input a second value (b) having n bits in length. By invoking the equality testing protocol $\prod_{eq}^{N,A}(a, b)$, the first party can receive an arithmetic share of an

indication bit ( $\langle \mathbf{1}\{a = b\}\rangle_0^A$ ) indicating whether *a = b*, and the second party can receive an arithmetic share of the indication bit ( $\langle \mathbf{1}\{a = b\}\rangle_1^A$ ). $\langle \mathbf{1}\{a = b\}\rangle_0^A + \langle \mathbf{1}\{a = b\}\rangle_1^A = 1$ indicates that *a = b*, and $\langle \mathbf{1}\{a = b\}\rangle_0^B + \langle \mathbf{1}\{a = b\}\rangle_1^B = 0$ indicates that $a \neq b$.

The algorithm below provides an example of the equality testing protocol $\prod_{eq}^{N,A}(a, b)$, which invokes the VOSE protocol $\prod_{vose}^{N,A}(\vec{T'})$ using arithmetic operations.

---

The parameter *N* is defined as $N = 2^n$

**Input:** $P_0$ inputs $a \in \{0, 1\}^n$ and $P_1$ inputs $b \in \{0, 1\}^n$

---

**Output:** $P_0, P_1$ learn $\langle 1\{a = b\}\rangle_0^A$ and $\langle 1\{a = b\}\rangle_1^A$, respectively.

<u>Offline</u>

1. $P_0$ picks $\epsilon_0 \leftarrow [N]$.

2. $P_0$ generates a vector $\vec{T'}$, where $t_{\epsilon_0}' = 1$ and $t_{\epsilon_0}^i = 0$ for $i \in [N] \setminus \{\epsilon_0\}$

3. $P_0$ and $P_1$ invoke $\{\vec{T_0}, \vec{T_1}, \epsilon_1\} = \prod_{vose}^{N,A}(\vec{T'})$

<u>Online</u>

1. $P_0$ computes $w_0 = (a + \epsilon_0) \bmod N$ and send it to $P_1$, while $P_1$ computes $w_1 = (\epsilon_1 - b) \bmod N$ and send it to $P_0$

2. $P_0$ and $P_1$ compute $w = (w_0 + w_1) \bmod N$, locally.

3. $P_0$ sets $\langle 1\{a = b\}\rangle_0^A = \langle t_w \rangle_0^A$ and $P_1$ sets $\langle 1\{a = b\}\rangle_1^A = \langle t_w \rangle_1^A$.

---

The equality testing protocol $\prod_{eq}^{N,A}(a, b)$ includes offline computation and online computation. At step 1 of the offline computation, P0 generates a random number $\varepsilon_0$ from 0 to N-1 as an offset, where N = $2^n$.

At step 2 of the offline computation, P0 generates a vector *T'* having N bits. Only the $\varepsilon_0^{th}$ bits of the N bits is 1, while all other bits are 0. For example, if n=2 and $\varepsilon_0$=2, then P0 generates $\vec{T}$ = [0,0,1,0].

At step 3 of the offline computation, P0 and P1 invoke the VOSE protocol $\prod_{vose}^{N,A}(\vec{T'})$. P0 inputs the vector $\vec{T}$, and P1 inputs the offset $\varepsilon_1$. As a result, P0 receives a share vector $\vec{T_0}$, $P_1$ can receive a share vector $\vec{T_1}$ and an offset $\varepsilon_1$, where $\vec{T_0} \oplus \vec{T_1} = shift(\vec{T'}, \varepsilon_1)$. For example, if n=2, $\varepsilon_0$=2, and P0 generates $\vec{T'}$ = [0,0,1,0], by invoking the VOSE protocol $\prod_{vose}^{N,B}(\vec{T'})$, P0 can receive $\vec{T_0}$ = [2,3,0,1]; P1 can receive $\vec{T_1}$ = [2,1,0,0] and $\varepsilon_1$=1, so that $\vec{T_0} \oplus \vec{T_1} = shift(\vec{T'}, \varepsilon_1)$ = [0,0,0,1].

At step 1 of the online computation, $P_0$ computes $w_0 = (a + \varepsilon_0) \bmod N$ and send it to $P_1$, and $P_1$ computes ($w_1 = \varepsilon_1 - b$) $\bmod N$ and send it to $P_0$.

At step 2 of the online computation, $P_0$ and $P_1$ compute w = $w_0 + w_1$ = ($a - b + \varepsilon_0 + \varepsilon_1$) $\bmod N$ locally.

At step 3 of the online computation, $P_0$ sets $\langle \mathbf{1}\{a = b\}\rangle_0^A = \langle t_w \rangle_0^A$, which is the wth integer in the share vector $\vec{T_0}$. $P_1$ sets $\langle \mathbf{1}\{a = b\}\rangle_1^A = \langle t_w \rangle_1^A$, which is the wth integer in the share vector $\vec{T_1}$.

As such, by invoking the equality testing protocol $\prod_{eq}^{N,A}(a, b)$, P0 receives an arithmetic share of the indication bit ( $\langle \mathbf{1}\{a = b\}\rangle_0^A$ ), and P1 receives an arithmetic share of the indication bit ( $\langle \mathbf{1}\{a = b\}\rangle_1^A$ ).

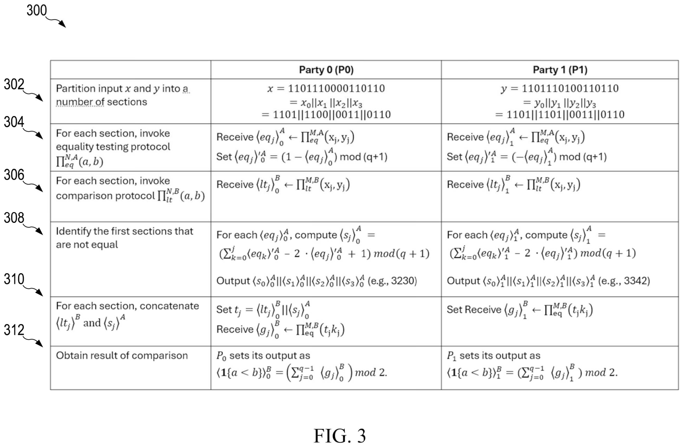

FIG. 3 illustrates an example process 300 of comparison in a secure two-party computation (MPC) system. A first party participating in the secure MPC is denoted as Party 0 (P0), and a second party participating in the secure MPC is denoted as Party 1 (P1). The comparison aims to determine whether a first private input is smaller than a second private input are equal (e.g., whether *a < b*), without disclosing the private inputs to any party.

As starter, the first party P0 has an arithmetic share of the private input *a* denoted as $\langle a \rangle_0^A$ and an arithmetic share of the private input $b$ denoted as $\langle b \rangle_0^A$. The second party P1 has an arithmetic share of the private input $a$ denoted as $\langle a \rangle_1^A$, and an arithmetic share of the private input $b$ denoted as $\langle b \rangle_1^A$. The sum of arithmetic shares is the private input, such that $\langle a \rangle_0^A + \langle a \rangle_1^A = a$, and $\langle b \rangle_0^A + \langle b \rangle_1^A = b$. For example, the secure MPC can generate a random integer as $\langle a \rangle_0^A$ and send it to P0, and generate $a - \langle a \rangle_0^A$ as $\langle a \rangle_1^A$ and send it to P1. As such, the secure MPC system can determine whether $a < b$ by determining whether $\langle a \rangle_0^A - \langle b \rangle_0^A < \langle b \rangle_1^A - \langle a \rangle_1^A$.

P0 generates $\langle a \rangle_0^A - \langle b \rangle_0^A$ as its input $x$, and P1 generates $\langle b \rangle_1^A - \langle a \rangle_1^A$ as its input $y$, where $x$ and $y$ are in binary form.

At 302, P0 partitions its input $x$ into a number of sections $x_j$, such that $x = x_0\|...\|x_{q-1}$. The length of the input $x$ is $l$ bits. $x_0$ is the most significant section, and $x_{q-1}$ is the least significant section. The length of each section is m bits, so that the input $x$ is partitioned into $q = \lceil \frac{l}{m} \rceil$ sections. As an example, as shown in FIG. 3, the input of P0 is $x = 1101110100110110$, which is 16 bits in length. P0 can partition $x$ into four sections, each section being 4 bits in length: $x_0 = 1101$, $x_1 = 1100$, $x_2 = 0011$, and $x_3 = 0110$. That is, $l = 16$, m = 4, and $q = 4$.

Similarly, P1 partitions its input $y$ into a number of sections $y_j$, such that $y = y_0\|...\|y_{q-1}$. $y_0$ is the most significant section, and $y_{q-1}$ is the least significant section. The length of the input $y$ is $l$ bits. The length of each section is $m$ bits, so that the input is partitioned into $q = \lceil \frac{l}{m} \rceil$ sections. As an example, as shown in FIG. 3, P1 inputs $y = 1101110100110110$, which is 16 bits in length. P1 can partition y into four sections, each section being 4 bits in length: $y_0 = 1101$, $y_1 = 1101$, $y_2 = 0011$, and $y_3 = 0110$.

At 304, for each section $x_j$ and the corresponding section $y_j$ ($j = \{0,1, ..., q_i - 1\}$), P0 and P1 can invoke an equality testing protocol $\prod_{\text{eq}}^{N,A}(x_j, y_j)$ (e.g., the equality testing protocol $\prod_{\text{eq}}^{N,A}(a, b)$ built based on the VOSE protocol as described above). P0 can receive an arithmetic share $\langle eq_j \rangle_0^A$ of an indicator $\mathbf{1}\{x_j = y_j\}$, and P1 can receive an arithmetic share $\langle eq_j \rangle_1^A$ of the indicator $\mathbf{1}\{x_j = y_j\}$. The arithmetic shares are calculated over the ring $\mathbb{Z}_{q+1}$. $\left( \langle eq_j \rangle_0^A + \langle eq_j \rangle_1^A \right) mod\ (q + 1) = 1$ indicates that $x_j = y_j$.

As an example in FIG. 3, for the section $x_0 = 0110$ and $y_0 = 0110$, by invoking the equality testing protocol $\prod_{\text{eq}}^{N,A}(x_0, y_0)$, P0 receives $\langle eq_0 \rangle_0^A$ (e.g., 2), and P1 receives $\langle eq_0 \rangle_1^A$ (e.g., 4).

Further, P0 can set $\langle eq_j \rangle_0'^A$ as $(1 - \langle eq_j \rangle_0^A)\ mod\ (q+1)$, and P1 can set $\langle eq_j \rangle_1'^A$ as $\left( -\langle eq_j \rangle_1^A \right) mod\ (q + 1)$. As such, $\left( \langle eq_j \rangle_0'^A + \langle eq_j \rangle_1'^A \right) mod\ (q + 1) = 0$ indicates that $x_j = y_j$.

At 306, for each section $x_j$ and the corresponding section $y_j$ ($j = \{0,1, ..., q_i - 1\}$), P0 and P1 can invoke the comparison protocol $\prod_{\text{lt}}^{N,B}(x_j, y_j)$. P0 can receive a Boolean share $\langle lt_j \rangle_0^B$ of an indicator $\mathbf{1}\{x_j < y_j\}$, and P1 can receive a Boolean share $\langle lt_j \rangle_1^B$ of the indicator $\mathbf{1}\{x_j < y_j\}$. $\left( \langle lt_j \rangle_0^B \oplus \langle lt_j \rangle_1^B \right) = 1$ indicates that $x_j < y_j$. $\left( \langle lt_j \rangle_0^B \oplus \langle lt_j \rangle_1^B \right) = 0$ indicates that $x_j \geq y_j$.

As an example, for the section $x_0 = 0110$ and $y_0 = 0110$, by invoking the comparison protocol $\prod_{\text{lt}}^{N,B}(x_0, y_0)$, P0 receives $\langle lt_0 \rangle_0^B$ (e.g., 1), and P1 receives $\langle lt_0 \rangle_1^B$ (e.g., 1).

At 308, the secure MPC can identify the most significant section in x and y that are not equal, by computing $\langle s_j \rangle_0^A = \left( \sum_{k=0}^{j} \langle eq_k \rangle_0'^A - 2 \cdot \langle eq_j \rangle_0'^A + 1 \right) mod\ (q + 1)$ for each $x_j$, and $\langle s_j \rangle_1^A = \left( \sum_{k=0}^{j} \langle eq_k \rangle_1'^A - 2 \cdot \langle eq_j \rangle_1'^A \right) mod\ (q + 1)$ for each $y_j$. If $\left( \langle s_j \rangle_0^A + \langle s_j \rangle_1^A \right) mod\ (q + 1) = 0$ when j=J, it indicates that the $J^{th}$ section is the most significant section that $x_j \neq y_j$, where $J \leq q$. Therefore, the secure MPC can compare whether $x < y$ by comparing whether $x_j < y_J$.

As an example in FIG. 3, P0 outputs $\langle s_0 \rangle_0^A$, $\langle s_1 \rangle_0^A$, $\langle s_2 \rangle_0^A$ and $\langle s_3 \rangle_0^A$ as 3, 2, 3, and 0, respectively. P1 outputs $\langle s_0 \rangle_1^A$, $\langle s_1 \rangle_1^A$, $\langle s_2 \rangle_1^A$ and $\langle s_3 \rangle_1^A$ as 3, 3, 4, and 2, respectively. Since $(\langle s_0 \rangle_0^A + \langle s_0 \rangle_1^A) \bmod 5 \neq 0$, $(\langle s_1 \rangle_0^A + \langle s_1 \rangle_1^A) \bmod 5 = 0$, $(\langle s_2 \rangle_0^A + \langle s_2 \rangle_1^A) \bmod 5 \neq 0$, $(\langle s_4 \rangle_0^A + \langle s_4 \rangle_1^A) \bmod 5 \neq 0$, it indicates that the $x_1$ and $y_1$ are the most significant sections in $x$ and $y$ that are not equal. If $x_1 < y_1$, then $x < y$, which is equivalent to $a < b$.

At 310, for each section $x_j$, P0 concatenates its corresponding $\langle lt_j \rangle_0^B$ and $\langle s_j \rangle_0^A$ into $t_j$ in binary form, such that $t_j = \langle lt_j \rangle_0^B || \langle s_j \rangle_0^A$. For each section $y_j$, P1 concatenates its corresponding $\langle lt_j \rangle_1^B$ and $\langle s_j \rangle_1^A$ into $k_j$ in binary form, such that $k_j = (\langle lt_j \rangle_1^B \oplus 1) || \left( -\langle s_j \rangle_1^A \right) \bmod (q+1)$. For example, for the first section $x_0$, $t_0 = \langle lt_0 \rangle_0^B || \langle s_0 \rangle_0^A = 111$; for the first section $y_0$, $k_0 = (\langle lt_0 \rangle_1^B \oplus 1) || \left( -\langle s_j \rangle_1^A \right) \bmod (q+1) = 010$.

As such, if $x_j$ and $y_j$ are the most significant section where $x_j < y_j$, $t_j = k_j$. Otherwise, $t_j \neq k_j$. P0 and P1 can invoke the equality testing protocol $\prod_{eq}^{N,B}(t_j, k_j)$. P0 can receive a Boolean share $\langle g_j \rangle_0^B$ of an indicator $\mathbf{1}\{t_j = k_j\}$, and P1 can receive a Boolean share $\langle g_j \rangle_1^B$ of the indicator $\mathbf{1}\{t_j = k_j\}$.

At 312, P0 sets its output $\langle \mathbf{1}\{a < b\} \rangle_0^B = \left( \sum_{j=0}^{q-1} \langle g_j \rangle_0^B \right) \bmod 2$. P1 sets its output as $\langle \mathbf{1}\{a < b\} \rangle_1^B = \left( \sum_{j=0}^{q-1} \langle g_j \rangle_1^B \right) \bmod 2$. As such, the secure MPC can obtain the result of the comparison: $\langle \mathbf{1}\{a < b\} \rangle_0^B \oplus \langle \mathbf{1}\{a < b\} \rangle_1^B = 1$ is equivalent to $x < y$, which is equivalent to $a < b$. $\langle \mathbf{1}\{a < b\} \rangle_0^B \oplus \langle \mathbf{1}\{a < b\} \rangle_1^B = 0$ is equivalent to $x \geq y$, which is equivalent to $a \geq b$.

Below is an example algorithm for process 300.

$P_0$ and $P_1$ locally computes $\langle d \rangle_0^A = x = \langle a \rangle_0^A - \langle b \rangle_0^A$ and $\langle d \rangle_1^A = \langle a \rangle_1^A - \langle b \rangle_1^A$.

$P_0$ and $P_1$ set $x = \langle d \rangle_0^A$ and $y = \langle b \rangle_1^A - \langle a \rangle_1^A - \langle d \rangle_1^A$, respectively.

$P_0$ parses its input as $x = x_0 || \ldots || x_{q-1}$ and $P_1$ parses its input as $y = y_0 || \ldots || y_{q-1}$, where $x_j, y_j \in \{0,1\}^m$, $q = \lceil \frac{l}{m} \rceil$, the bit lengths of $x$ and $y$ are equal, denoted as $l$.

Let $M = 2^m$.

**for** $j = \{0,1,\dots,q-1\}$ **do**

$$\langle lt_j \rangle_0^B, \langle lt_j \rangle_1^B \leftarrow \prod_{lt}^{M,B}(x_j, y_j)$$

$$\langle eq_j \rangle_0^A, \langle eq_j \rangle_1^A \leftarrow \prod_{eq}^{M,A}(x_j, y_j) \text{ over the ring } \mathbb{Z}_{q+1}$$

P0 sets $\langle eq_j \rangle_0'^A = \left(1 - \langle eq_j \rangle_0^A\right) mod \ (q+1)$, and P1 sets $\langle eq_j \rangle_1'^A = \left(-\langle eq_j \rangle_1^A\right) mod \ (q+1)$.

$P_0$ computes $\langle s_j \rangle_0^A = \left(\sum_{k=0}^j \langle eq_k \rangle_0'^A - 2 \cdot \langle eq_j \rangle_0'^A + 1\right) mod \ (q+1)$.

$P_1$ computes $\langle s_j \rangle_1^A = \left(\sum_{k=0}^j \langle eq_k \rangle_1'^A - 2 \cdot \langle eq_j \rangle_1'^A\right) mod(q+1)$.

**end for**

**for** $j = \{0,1,\dots,q-1\}$ **do**

$$t_j = \langle lt_j \rangle_0^B || \langle s_j \rangle_0^A$$

$$k_j = (\langle lt_j \rangle_1^B \oplus 1) || \left(-\langle s_j \rangle_1^A\right) mod \ (q+1)$$

$$\langle g_j \rangle_0^B, \langle g_j \rangle_1^B \leftarrow \prod_{eq}^{M,B}(t_j, k_j)$$

**end for**

$P_0$ sets its output as $\left(\sum_{j=0}^{q-1} \langle g_j \rangle_0^B\right) mod \ 2$. $P_1$ sets its output as $(\sum_{j=0}^{q-1} \langle g_j \rangle_1^B) mod \ 2$.

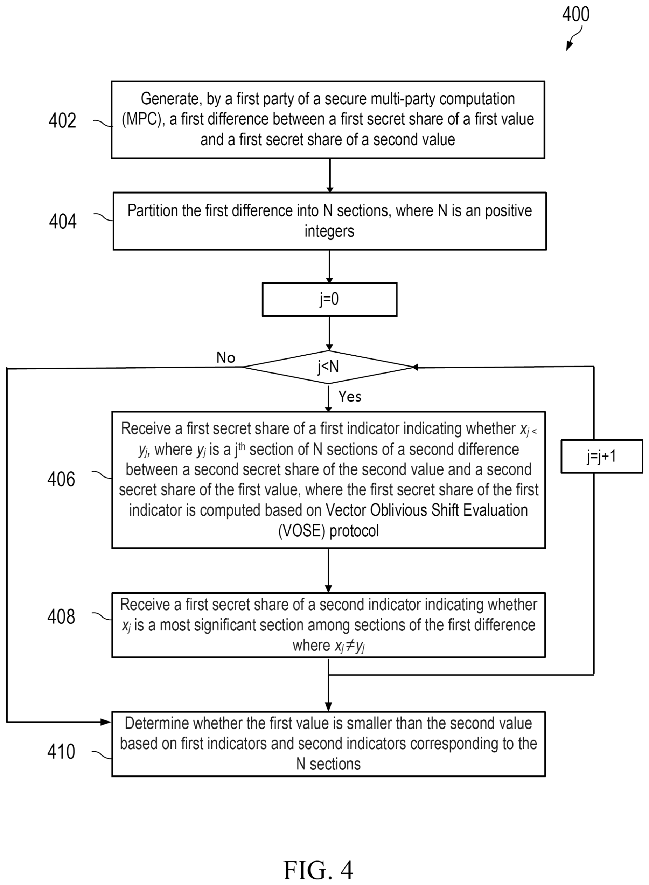

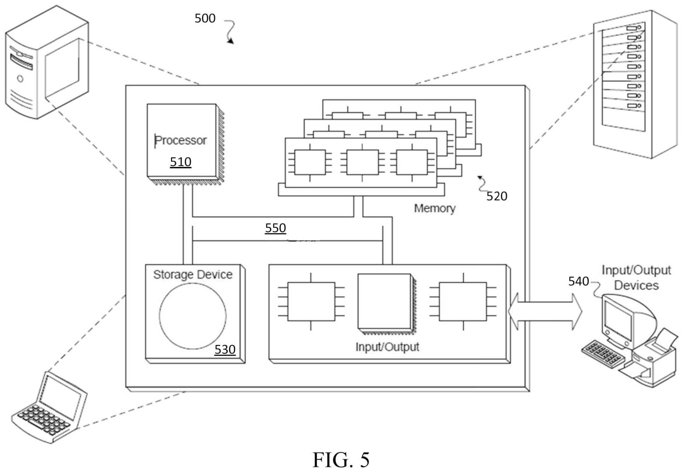

FIG. 4 illustrates a flow chart of the example method 400 of performing equality testing (e.g., as shown by the example in FIG. 3). The operations shown in method 400 may not be exhaustive and that other operations can be performed as well before, after, or in between any of the illustrated operations. Further, some of the operations may be performed simultaneously, or in a different order than shown in FIG. 4. In some implementations, some of the operations may be performed by a computer, or multiple computers based on secure MPC. The one or more computers the process 400 will be described as being performed by a system of, located in one or more locations, and programmed appropriately in accordance with this specification. For example, a multi-party computation system, including one or more of a computation system 500 of FIG. 5, appropriately programmed, can perform the method 400.

At 402, a first party (e.g., P0 of FIG. 3) of a secure multi-party computation (MPC) generates a first difference (e.g., $x$ of FIG. 3) between a first secret share (e.g., arithmetic share $\langle a \rangle_0^A$) of a first value (e.g., private input $a$) and a first secret share (e.g., arithmetic share $\langle b \rangle_0^A$) of a second value (e.g., private input $b$). A second party (e.g., P1 of FIG. 3) of the secure MPC generates a second difference (e.g., $y$ of FIG. 3) between a second secret share (e.g., arithmetic share $\langle b \rangle_1^A$) of the second value and a second secret share (e.g., arithmetic share $\langle a \rangle_1^A$) of the first value. In some implementations, the first difference and the second difference, and their respective secret shares can also be in binary form (e.g., converted from the arithmetic form).

At 404, the first party partitions the first difference into N sections (e.g., $x = x_0 || x_1 \dots || x_{N-1}$). Each section can include M bits, where N and M are positive integers. The second party partitions the second difference into N sections (e.g., $y = y_0 || y_1 \dots || y_{N-1}$), each including M bits.

For each section, e.g., a $j^{th}$ section ($x_j$) of the first difference, where $j = 0, 1, ..., N - 1$:

At 406, the first party receives a first secret share of a first indicator (e.g., $\langle lt_j \rangle_0^B$) indicating whether $x_j < y_j$, where $y_j$ is a $j^{th}$ section of N sections of the second difference. The second party receives, based on VOSE protocol, a second secret share of the first indicator (e.g., $\langle lt_j \rangle_1^B$). The first secret share and the second secret share of the first indicator can be computed based on Vector Oblivious Shift Evaluation (VOSE) protocol.

In some implementations, the first party generates a first vector (e.g., $\vec{T}$) comprising $2^{M+1}$ bits, wherein $2^M$ bits before a $\varepsilon_0^{th}$ positions in the first vector are set as 1, and $2^M$ bits at and after the $\varepsilon_0^{th}$ position in the first vector are set as 0. Based on local computation based on the VOSE protocol, the first party receives a first share vector (e.g., $\vec{T_0}$) of a second vector (e.g., $shift(\vec{T}, \varepsilon_1)$) comprising $2^{M+1}$ bits, wherein each bit in the second vector is offset by $\varepsilon_1$ positions from a corresponding bit in the first vector; and the second party receives a second share vector (e.g., $\vec{T_1}$) of the second vector and the offset $\varepsilon_1$. The first secret share of the first indicator is a bit at a $(\varepsilon_0 + x_j + \varepsilon_1 - y_j)^{th}$ position of the first share vector of the second vector. The second secret share of the first indicator is a bit at the $(\varepsilon_0 + x_j + \varepsilon_1 - y_j)^{th}$ position of the second share vector of the second vector.

At 408, the first party receives a first secret share of a second indicator (e.g., $\langle s_j \rangle_0^A$) indicating whether $x_j$ is a most significant section among sections of the first difference where $x_j \neq y_j$. The second party receives a second secret share of the second indicator (e.g., $\langle s_j \rangle_1^A$).

In some implementations, the first party obtains the first secret share of the second indicator based on a first secret share of a third indicator (e.g., $\langle eq_j \rangle_0^A$) indicating whether $x_j < y_j$. For example,

$$\langle s_j \rangle_0^A = \left( \Sigma_{k=0}^j \langle eq_k \rangle_0'^A - 2 \cdot \langle eq_j \rangle_0'^A + 1 \right) mod(N+1), \text{ where } \langle eq_j \rangle_0'^A = \left( 1 - \langle eq_j \rangle_0^A \right) mod(N+1).$$

The second party obtains the second secret share of the second indicator based on a second secret share of the third indicator (e.g., $\langle eq_j \rangle_1^A$). For example, $\langle s_j \rangle_1^A = \left( \Sigma_{k=0}^j \langle eq_k \rangle_1'^A - 2 \cdot \langle eq_j \rangle_1'^A \right) mod(N+1)$, where

$$\langle eq_j \rangle_1'^A = \left( -\langle eq_j \rangle_1^A \right) mod(N+1).$$

At 410, after receiving secret shares of first indicators and second indicators corresponding to all the N sections, the secure MPC can determine whether the first value is smaller than the second value based on first indicators and the second indicators corresponding to the N sections.

In some implementations, for the $j^{th}$ section ($x_j$) of the first difference, where $j = 0, 1, ... , N - 1$: the first party generates $t_j$ by concatenating $\langle lt_j \rangle_0^B$ and $\langle s_j \rangle_0^A$, wherein $\langle lt_j \rangle_0^B$ is the first secret share of the first indicator and $\langle s_j \rangle_0^A$ is the first secret share of the second indicator; the second party generates $k_j$ by concatenating ( $\langle lt_j \rangle_1^B \oplus 1$ ) and $\left( -\langle s_j \rangle_1^A \right) mod(N+1)$, where $\langle lt_j \rangle_1^B$ is a second secret share of the first indicator and $\langle s_j \rangle_1^A$ is a second secret share of the second indicator. The first party can receive a first secret share of a fourth indicator (e.g., $\langle g_j \rangle_0^B$) that indicates whether $t_j = k_j$, and the second party can receive a second secret share of the fourth indicator (e.g., $\langle g_j \rangle_1^B$). The secret shares of the fourth indicator can be computed based on the VOSE protocol.

In some implementations, the first party sets its final output as a sum of the first secret shares of the fourth indicators corresponding to the N sections (e.g., $\left( \Sigma_{j=0}^{q-1} \langle g_j \rangle_0^B \right) mod\ 2$). The second party sets its final output as a sum of second secret shares of the fourth indicators corresponding to the N sections (e.g., $\left( \Sigma_{j=0}^{q-1} \langle g_j \rangle_1^B \right) mod\ 2$). The XOR result of the final output of the first party and the final output of the second party can indicate whether the first difference is smaller than the second difference (e.g., $x < y$), which is equivalent to whether the first value is smaller than the second value (e.g., $a < b$).

In some implementations, the secure MPC is a secure two-party computation.

FIG. 5 illustrates a schematic diagram of an example computing system 500. The system 500 can be used for the operations described in association with the implementations described herein. For example, the system 500 may be included in computing devices of the one or more online components and/or the one or more offline components. The system 500 includes a processor 510, a memory 520, a storage device 530, and an input/output device 540, which are interconnected using a system bus 550. The processor 510 is capable of processing instructions for execution within the system 500. In some implementations, the processor 510 is a single-threaded processor. The processor 510 is a multi-threaded processor. The processor 510 is capable of processing instructions stored in the memory 520 or on the storage device 530 to display graphical information for a user interface on the input/output device 540.

The memory 520 stores information within the system 500. In some implementations, the memory 520 is a computer-readable medium. The memory 520 can be a volatile memory unit or a non-volatile memory unit. The storage device 530 is capable of providing mass storage for the system 500. The storage device 530 is a computer-readable medium. The storage device 530 may be a floppy disk device, a hard disk device, an optical disk device, or a tape device. The input/output device 540 provides input/output operations for the system 500. The input/output device 540 includes a keyboard and/or pointing device. The input/output device 540 includes a display unit for displaying graphical user interfaces.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random-access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship with each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of what may be claimed, but rather as descriptions of features that may be specific to particular implementations. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features may be described as acting in certain combinations and even initially claimed as such, one or more features from a claimed combination can, in some cases, be excised from the combination, and the claimed combination may be directed to a sub-combination or variation of a sub-combination.

As used in this disclosure, the terms "a," "an," or "the" are used to include one or more than one unless the context clearly dictates otherwise. The term "or" is used to refer to a nonexclusive "or" unless otherwise indicated. The statement "at least one of A and B" has the same meaning as "A, B, or A and B." In addition, the phraseology or terminology employed in this disclosure, and not otherwise defined, is for the purpose of description only and not of limitation. Any use of section headings is intended to aid reading of the document and is not to be interpreted as limiting; information that is relevant to a section heading may occur within or outside of that particular section.

As used in this disclosure, the term "about" or "approximately" can allow for a degree of variability in a value or range, for example, within 10%, within 5%, or within 1% of a stated value or of a stated limit of a range.

As used in this disclosure, the term "substantially" refers to a majority of, or mostly, as in at least about 50%, 60%, 70%, 80%, 90%, 95%, 96%, 97%, 98%, 99%, 99.5%, 99.9%, 99.99%, or at least about 99.999% or more.

Values expressed in a range format should be interpreted in a flexible manner to include not only the numerical values explicitly recited as the limits of the range, but also the individual numerical values or sub-ranges encompassed within that range as if each numerical value and sub-range is explicitly recited. For example, a range of "0.1% to about 5%" or "0.1% to 5%" should be interpreted to include about 0.1% to about 5%, as well as the individual values (for example, 1%, 2%, 3%, and 4%) and the sub-ranges (for example, 0.1% to 0.5%, 1.1% to 2.2%, 3.3% to 4.4%) within the indicated range. The statement "X to Y" has the same meaning as "about X to about Y," unless indicated otherwise. Likewise, the statement "X, Y, or Z" has the same meaning as "about X, about Y, or about Z," unless indicated otherwise.

Particular implementations of the subject matter have been described. Other implementations, alterations, and permutations of the described implementations are within the scope of the following claims as will be apparent to those skilled in the art. While operations are depicted in the drawings or claims in a particular order, such operations are not required to be performed in the particular order shown or in sequential order, or that all illustrated operations be performed (some operations may be considered optional), to achieve desirable results. In certain circumstances, multitasking or parallel processing (or a combination of multitasking and parallel processing) may be advantageous and performed as deemed appropriate.

Moreover, the separation or integration of various system modules and components in the previously described implementations are not required in all implementations, and the described components and systems can generally be integrated together or packaged into multiple products.

Accordingly, the previously described example implementations do not define or constrain the present disclosure. Other changes, substitutions, and alterations are also possible without departing from the spirit and scope of the present disclosure.

The foregoing description of the specific implementations can be readily modified and/or adapted for various applications. Therefore, such adaptations and modifications are intended to be within the meaning and range of equivalents of the disclosed implementations, based on the teaching and guidance presented herein.

The breadth and scope of the present disclosure should not be limited by any of the above-described example implementations, but should be defined only in accordance with the following claims and their equivalents. Accordingly, other implementations also are within the scope of the claims.

**Claims**

1. A computer-implemented method, comprising:

   generating (402), by a first party of a secure multi-party computation, MPC, a first difference between a first secret share of a first value and a first secret share of a second value;

   partitioning (404) the first difference in binary form into N sections, where N is a positive integer; and

   determining (410) whether the first value is smaller than the second value based on first indicators and second indicators corresponding to the N sections, wherein:

   the first indicators comprise a first indicator that indicates a comparison result between $x_j$ and $y_j$ computed based on a Vector Oblivious Shift Evaluation, VOSE, protocol, wherein $x_j$ is a $j^{th}$ section of the first difference, $y_j$ is a $j^{th}$ section of N sections of a second difference between a second secret share of the second value and a second secret share of the first value, and $j = 0, 1, ... , N - 1$, and

   the second indicators comprise a second indicator that indicates whether $x_j$ is a most significant section among sections of the first difference where $x_j \neq y_j$.

2. The computer-implemented method of claim 1, further comprising:
   for the $j^{th}$ section ($x_j$) of the first difference:

   receiving (406) a first secret share of the first indicator; and

   receiving (408) a first secret share of the second indicator.

3. The computer-implemented method of claim 2, wherein the second difference is generated by a second party of the secure MPC, and the method comprises:
   for the $j^{th}$ section ($x_j$) of the first difference:

   sending, to the second party, a second secret share of the first indicator; and

   sending, to the second party, a second secret share of the second indicator.

4. The computer-implemented method of claim 1, wherein each section of the N sections comprises M bit, where M is a positive integer, and
   wherein the first indicator is computed by:

   generating, by the first party, a first vector comprising $2^{M+1}$ bits, wherein $2^M$ bits before a $\varepsilon_0{}^{th}$ positions in the first vector are set as 1, and $2^M$ bits at and after the $\varepsilon_0{}^{th}$ position in the first vector are set as 0;

   receiving, by the first party, a first share vector of a second vector comprising $2^{M+1}$ bits, wherein each bit in the second vector is offset by $\varepsilon_1$ positions from a corresponding bit in the first vector; and

   sending, to a second party of the secure MPC, a second share vector of the second vector and an offset $\varepsilon_1$.

5. The computer-implemented method of claim 4, wherein a first secret share of the first indicator is a bit at a $(\varepsilon_0 + x_j + \varepsilon_1 - y_j)^{th}$ position of the first share vector of the second vector, and
   wherein a second secret share of the first indicator is a bit at the $(\varepsilon_0 + x_j + \varepsilon_1 - y_j)^{th}$ position of the second share vector of the second vector.

6. The computer-implemented method of claim 2, comprising:
   receiving a first secret share of a third indicator that indicates whether $x_j = y_j$, wherein the first secret share of the second indicator is computed based on the first secret share of the third indicator.

7. The computer-implemented method of claim 6, wherein each section of the N sections comprises M bit, where M is a positive integer, and wherein the third indicator is computed by:

generating, by the first party, a third vector comprising $2^M$ bits, wherein a bit at a $\varepsilon_2{}^{th}$ position in the third vector is set as 1 and other bits are set as 0;
receiving, by the first party, a first share vector of a fourth vector comprising $2^M$ bits, wherein each bit in the fourth vector is offset by $\varepsilon_3$ positions from a corresponding bit in the third vector; and
sending, to a second party of the secure MPC, a second share vector of the fourth vector and an offset $\varepsilon_3$.

8. The computer-implemented method of claim 7, wherein the first secret share of the third indicator is a bit at a $(\varepsilon_2 + x_j + \varepsilon_3 - y_j)^{th}$ position of the first share vector of the fourth vector, and wherein a second secret share of the third indicator is a bit at the $(\varepsilon_2 + x_j + \varepsilon_3 - y_j)^{th}$ position of the second share vector of the fourth vector.

9. The computer-implemented method of claim 1, wherein determining whether the first value is smaller than the second value based on the first indicators and the second indicators corresponding to the N sections comprises:
for the $j^{th}$ section ($x_j$) of the first difference:

generating $t_j$ by concatenating $\langle lt_j \rangle_0^B$ and $\langle s_j \rangle_0^A$, wherein $\langle lt_j \rangle_0^B$ is a first secret share of the first indicator and $\langle s_j \rangle_0^A$ is a first secret share of the second indicator; and

receiving a first secret share of a fourth indicator that indicates whether $t_j = k_j$, wherein $k_j$ is generated by concatenating ( $\langle lt_j \rangle_1^B \oplus 1$ ) and $\left( -\langle s_j \rangle_1^A \right) mod \ (N+1)$, wherein $\langle lt_j \rangle_1^B$ is a second secret share of the first indicator and $\langle s_j \rangle_1^A$ is a second secret share of the second indicator.

10. The computer-implemented method of claim 1, wherein the secure MPC is a secure two-party computation.

11. One or more computer-readable storage media storing one or more instructions that, when executable by one or more computers, cause the one or more computers to perform the computer-implemented method of any of claims 1 to 10.

12. A computer-implemented system, comprising:

one or more computers; and
one or more computer memory devices interoperably coupled with the one or more computers and having computer-readable storage media storing one or more instructions that, when executed by the one or more computers, perform the computer-implemented method of any of claims 1 to 10.

For $i \in [n]$, right circular shift the $i^{th}$ row $i$ times.

FIG. 1

For $i \in [n]$, right circular shift the $i^{th}$ row $i$ times.

FIG. 2

| | Party 0 (P0) | Party 1 (P1) |
|---|---|---|
| Partition input $x$ and $y$ into a number of sections | $x = 1101110000110110$ $= x_0 \| x_1 \| x_2 \| x_3$ $= 1101 \| 1100 \| 0011 \| 0110$ | $y = 1101110100110110$ $= y_0 \| y_1 \| y_2 \| y_3$ $= 1101 \| 1101 \| 0011 \| 0110$ |
| For each section, invoke equality testing protocol $\prod_{eq}^{N,A}(a,b)$ | Receive $\langle eq_j \rangle_0^A \leftarrow \prod_{eq}^{M,A}(x_j, y_j)$ Set $\langle eq_j \rangle_0'^A = (1 - \langle eq_j \rangle_0^A) \bmod (q+1)$ | Receive $\langle eq_j \rangle_1^A \leftarrow \prod_{eq}^{M,A}(x_j, y_j)$ Set $\langle eq_j \rangle_1'^A = (-\langle eq_j \rangle_1^A) \bmod (q+1)$ |
| For each section, invoke comparison protocol $\prod_{lt}^{N,B}(a,b)$ | Receive $\langle lt_j \rangle_0^B \leftarrow \prod_{lt}^{M,B}(x_j, y_j)$ | Receive $\langle lt_j \rangle_1^B \leftarrow \prod_{lt}^{M,B}(x_j, y_j)$ |
| Identify the first sections that are not equal | For each $\langle eq_j \rangle_0^A$, compute $\langle s_j \rangle_0^A =$ $(\sum_{k=0}^{j} \langle eq_k \rangle_0'^A - 2 \cdot \langle eq_j \rangle_0'^A + 1) \bmod(q+1)$ Output $\langle s_0 \rangle_0^A \| \langle s_1 \rangle_0^A \| \langle s_2 \rangle_0^A \| \langle s_3 \rangle_0^A$ (e.g., 3230) | For each $\langle eq_j \rangle_1^A$, compute $\langle s_j \rangle_1^A =$ $(\sum_{k=0}^{j} \langle eq_k \rangle_1'^A - 2 \cdot \langle eq_j \rangle_1'^A) \bmod(q+1)$ Output $\langle s_0 \rangle_1^A \| \langle s_1 \rangle_1^A \| \langle s_2 \rangle_1^A \| \langle s_3 \rangle_1^A$ (e.g., 3342) |
| For each section, concatenate $\langle lt_j \rangle^B$ and $\langle s_j \rangle^A$ | Set $t_j = \langle lt_j \rangle_0^B \| \langle s_j \rangle_0^A$ Receive $\langle g_j \rangle_0^B \leftarrow \prod_{eq}^{M,B}(t_j k_j)$ | Set Receive $\langle g_j \rangle_1^B \leftarrow \prod_{eq}^{M,B}(t_j k_j)$ |
| Obtain result of comparison | $P_0$ sets its output as $\langle \mathbf{1}\{a < b\} \rangle_0^B = \left( \sum_{j=0}^{q-1} \langle g_j \rangle_0^B \right) \bmod 2.$ | $P_1$ sets its output as $\langle \mathbf{1}\{a < b\} \rangle_1^B = \left( \sum_{j=0}^{q-1} \langle g_j \rangle_1^B \right) \bmod 2.$ |

FIG. 3

400

402 — Generate, by a first party of a secure multi-party computation (MPC), a first difference between a first secret share of a first value and a first secret share of a second value

404 — Partition the first difference into N sections, where N is an positive integers

j=0

j<N — No

Yes

406 — Receive a first secret share of a first indicator indicating whether $x_j < y_j$, where $y_j$ is a $j^{th}$ section of N sections of a second difference between a second secret share of the second value and a second secret share of the first value, where the first secret share of the first indicator is computed based on Vector Oblivious Shift Evaluation (VOSE) protocol

j=j+1

408 — Receive a first secret share of a second indicator indicating whether $x_j$ is a most significant section among sections of the first difference where $x_j \neq y_j$

410 — Determine whether the first value is smaller than the second value based on first indicators and second indicators corresponding to the N sections

FIG. 4

FIG. 5

Europäisches
Patentamt
European
Patent Office
Office européen
des brevets

## EUROPEAN SEARCH REPORT

**Application Number**

EP 25 21 8617

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DEEVASHWER RATHEE ET AL: "CrypTFlow2: Practical 2-Party Secure Inference", ARXIV.ORG, CORNELL UNIVERSITY LIBRARY, 201 OLIN LIBRARY CORNELL UNIVERSITY ITHACA, NY 14853, 13 October 2020 (2020-10-13), XP081785378, DOI: 10.1145/3372297.3417274 * sections 1.2, 3.1 * | 1-12 | INV. H04L9/08 |
| Y | OHATA SATSUYA ET AL: "Communication-Efficient (Client-Aided) Secure Two-Party Protocols and Its Application", 18 July 2020 (2020-07-18), 20200718, PAGE(S) 369 - 385, XP047557198, [retrieved on 2020-07-18] * section 4.1 * | 1-12 | |
| Y | TIANPEI LU ET AL: "Efficient 2PC for Constant Round Secure Equality Testing and Comparison", IACR, INTERNATIONAL ASSOCIATION FOR CRYPTOLOGIC RESEARCH , vol. 20240613:062237 13 June 2024 (2024-06-13), pages 1-32, XP061087766, Retrieved from the Internet: URL:https://eprint.iacr.org/archive/2024/949/1718259757.pdf [retrieved on 2024-06-14] * section IV * | 1-12 | **TECHNICAL FIELDS SEARCHED (IPC)**<br><br>H04L |

The present search report has been drawn up for all claims

| Place of search | Date of completion of the search | Examiner |
|---|---|---|
| Munich | 14 April 2026 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)